# EUROPÄISCHE PATENTSCHRIFT

(11) **EP 2 645 348 B1**
(45) Veröffentlichungstag und Bekanntmachung des Hinweises auf die Patenterteilung: **27.05.2015**
(21) Anmeldenummer: 12162622.0
(22) Anmeldetag: 30.03.2012
(51) Int. Cl.: G08B 25/01, B60R 21/017, H04M 11/04, B60R 16/033

(54) **Notfallsystem für Kraftfahrzeuge**
Emergency system for motor vehicles
Système d'urgence pour véhicules automobiles

(43) Veröffentlichungstag der Anmeldung: 02.10.2013
(73) Patentinhaber: VARTA Microbattery GmbH, 73479 Ellwangen (DE)
(72) Erfinder: Hieber, Robert, 73485 Unterschneidheim (DE); Hald, Rainer, 73479 Ellwangen (DE)
(74) Vertreter: Patentanwälte Ruff, Wilhelm, Beier, Dauster & Partner

(56) Entgegenhaltungen:
- EP-A2- 1 026 769
- WO-A1-2010/145439
- WO-A2-03/042943
- CN-A- 1 630 129
- CN-Y- 201 038 282
- DE-A1- 19 945 147

## Beschreibung

Die vorliegende Erfindung betrifft ein Notfallsystem für ein Kraftfahrzeug mit Bordnetz, das bei einem Notfall unabhängig vom Zustand des Bordnetzes des Kraftfahrzeugs einen Funkruf absetzen kann. Weiterhin betrifft die Erfindung ein Verfahren zum Betrieb eines solchen Notfallsystems.

Im September 2011 wurde von der EU-Kommission beschlossen, ab dem Jahr 2015 Neuwagen verpflichtend mit einem automatischen Notfallsystem auszurüsten, das bei Verkehrsunfällen selbsttätig eine Rettungsleitstelle informiert. Bei einem Unfall soll über Crashsensoren die Schwere des Unfalls ermittelt werden. Das Ergebnis soll zusammen mit anderen Daten, beispielsweise über den Ort des Unfalls (bestimmbar z.B. über GPS), über ein Mobilfunknetz an eine Notrufzentrale übermittelt werden, die dann umgehend die zuständige Rettungsleitstelle informiert. Durch in der Folge rascher initiierbarer Rettungsmaßnahmen hofft man, die Zahl der Verkehrstoten signifikant senken zu können.

Unter dem Bordnetz eines Kraftfahrzeugs wird bekanntlich die Gesamtheit aller seiner elektrischen Komponenten verstanden. Es umfasst in der Regel einen Energiespeicher, aus dem es gespeist wird, gegebenenfalls einen elektrischen Generator, Sensoren, Module zur Positionsbestimmung (z.B. ein GPS-Modul), Anzeigeelemente wie Warn- und Kontrollleuchten, Aktoren (insbesondere Elektromotoren), Audiosysteme (Lautsprecher, Audioverstärker) sowie ein oder mehrere Steuergeräte zur Ansteuerung dieser Komponenten, insbesondere eine Bordelektronik, und diese verbindende Kabel- und Bussysteme.

Bei Unfällen werden die Bordnetze der am Unfall beteiligten Kraftfahrzeuge häufig in Mitleidenschaft gezogen oder sogar gewollt deaktiviert. Ein Notfallsystem verfügt deshalb in der Regel über einen eigenen Energiespeicher, eine Notfallbatterie, und ist somit unabhängig von dem Energiespeicher, aus dem das Bordnetz gespeist wird.

Aus der WO 03/042943 A2 ist z.B. eine Fahrzeugnotrufeinrichtung bekannt, umfassend eine eigene Batterie, einen GSM-Transreceiver, eine Sende-/Empfangseinheit und einen Sensor. Ein Notruf kann auf zwei Arten abgesetzt werden kann: 1. direkt über den GSM-Transreceiver oder 2. über die Sende-/Empfangseinheit, welche indirekt durch ein Signal (z.B. Bluetooth) an ein Funktelefon den Notruf veranlasst. Als Initiatoren kommen in beiden Fällen entweder der Sensor oder ein Auslösesignal des Airbags in Betracht.

Die Leistung von Batterien ist bekanntlich in nicht unerheblichem Ausmaß von der jeweils herrschenden Betriebstemperatur abhängig. Bei tiefen Temperaturen, beispielsweise bei Temperaturen von unter 0 °C, die im europäischen Winter problemlos auftreten können, liefern kommerziell verfügbare Batteriesysteme signifikant niedrigere Spannungen als bei Temperaturen über 0 °C. Ihre Kapazität sinkt auf einen Bruchteil der Nennkapazität. Um das Funktionieren eines Notfallsystems auch in solchen Extremsituationen zu gewährleisten, ist es üblich, Batteriesysteme deutlich größer zu dimensionieren, als es für einen Betrieb ausschließlich bei "Normaltemperatur" (bei einer Außentemperatur zwischen 0 °C und 40 °C) erforderlich wäre.

Auch das Laden von Batterien kann bei tiefen Temperaturen problematisch sein. Wenn nämlich während oder nach dem Ladeprozess die Temperatur wieder ansteigt, kann der Temperaturanstieg die Batterie in einen kritischen und überladenen Zustand überführen.

Eine Lösung für letzteres Problem wird in der CN 1630129 A vorgeschlagen. Beschrieben ist in dieser ein Ladegerät für Lithiumbatterien, das eine Heizeinrichtung aufweist. Das Anwendungsfeld erstreckt sich dabei insbesondere auf portable elektronische Geräte. Fällt die Außentemperatur unter einen festgelegten Soll-Wert, wird über einen Thermoschalter die Heizeinheit mit elektrischer Energie aus einer Stromquelle versorgt und hält so die zu ladende Batterie in einem für den Ladevorgang optimalen Temperaturbereich.

Der vorliegenden Erfindung lag die Aufgabe zugrunde, ein Notfallsystem bereitzustellen, das auch bei extrem tiefen Temperaturen zuverlässig seine Aufgabe erfüllt und das gegenüber aus dem Stand der Technik bekannten Notfallsystemen verbessert ist.

Diese Aufgabe wird gelöst durch das Notfallsystem mit den Merkmalen des Anspruchs 1. Bevorzugte Ausführungsformen des erfindungsgemäßen Notfallsystems sind in den abhängigen Ansprüchen 2 bis 9 angegeben. Darüber hinaus ist auch das Verfahren mit den Merkmalen des Anspruchs 10 Gegenstand der vorliegenden Erfindung.

Ein erfindungsgemäßes Notfallsystem ist, wie die eingangs beschriebenen, aus dem Stand der Technik bekannten Notfallsysteme, für den Einsatz in Kraftfahrzeugen mit einem Bordnetz vorgesehen, insbesondere in ein Kraftfahrzeug integriert. Es dient also dazu, bei einem Notfall, insbesondere bei einem Unfall, einen Funknotruf abzusetzen und dies völlig unabhängig vom Zustand des Bordnetzes. Selbst bei einem völligen Ausfall desselben, beispielsweise im Falle einer gewollten oder ungewollten Abtrennung des dem Bordnetz zugeordneten Energiespeichers von den übrigen Komponenten des Bordnetzes, soll das erfindungsgemäße Notfallsystem seine Funktion erfüllen können.

Das Notfallsystem umfasst eine Funkeinrichtung zum Absetzen des Notrufs. Hierbei handelt es sich in der Regel um eine Mobilfunkeinrichtung. Die Funkeinrichtung ist bevorzugt mit einem oder mehreren Crashsensoren gekoppelt, gegebenenfalls über eine zum Bordnetz gehörige Bordelektronik. Über die Bordelektronik kann die Funkeinrichtung auch mit sonstigen Komponenten des Bordnetzes gekoppelt sein, insbesondere mit einem Modul zur Positionsbestimmung. Bei einem Notfall wird über die Funkeinrichtung ein vordefinierter Datensatz an eine Notrufzentrale übermittelt, die auf Basis der erhaltenen Informationen die eingangs skizzierten Maßnahmen einleiten kann.

In einigen bevorzugten Ausführungsformen verfügt die Funkeinrichtung über einen Rückkanal. Über diesen können Unfallopfer im Fall eines Unfalls beispielsweise mit der erwähnten Notrufzentrale kommunizieren. Die Funkeinrichtung ist in diesen Fällen bevorzugt mit einem Lautsprecher und/oder einem Audioverstärker und/oder einem Mikrophon gekoppelt, die bevorzugt Bestandteil des Bordnetzes sind.

Neben der Funkeinrichtung umfasst das erfindungsgemäße Notfallsystem weiterhin eine Notfallbatterie zur Versorgung der Funkeinrichtung mit elektrischer Energie. Verfügt die Funkeinrichtung über den erwähnten Rückkanal, so werden im Notfall gegebenenfalls auch der Lautsprecher und/oder der Audioverstärker und/oder das Mikrophon von der Notfallbatterie versorgt, so dass eine bidirektionale Kommunikation möglich ist.

Der Begriff "Batterie" meinte ursprünglich mehrere in Serie geschaltete elektrochemische Zellen. Heute werden jedoch auch einzelne elektrochemische Zellen häufig als Batterie bezeichnet. Dies soll auch vorliegend so gelten. Die Notfallbatterie kann entsprechend eine oder mehrere elektrochemische Zellen umfassen. Jede der Einzelzellen umfasst wiederum mindestens eine positive Elektrode und mindestens eine negative Elektrode sowie einen oder mehrere Separatoren, die die Elektroden voneinander trennen.

Ein erfindungsgemäßes Notfallsystem zeichnet sich besonders dadurch aus, dass es eine elektrische Heizeinrichtung aufweist, mit der die Notfallbatterie erwärmt werden kann, wenn ihre Temperatur unterhalb eines unteren Grenzwerts liegt oder unter einen solchen unteren Grenzwert fällt. Diese Heizeinrichtung wird vom Bordnetz mit Strom gespeist. Bevorzugt weist sie einen oder mehrere Heizwiderstände auf, die elektrische Energie in Wärmeenrgie umwandeln. Mit einer solchen Lösung lässt sich ein Notfallbetrieb selbst noch bei Temperaturen unter minus 40 °C gewährleisten.

Bevorzugt ist die Heizeinrichtung an das vom Zündstartschalter geschaltete Plus (Terminal 15 nach DIN 72552) des Bordnetzes eines Kraftfahrzeugs gekoppelt. Die Heizeinrichtung ist dann nur bei eingeschalteter Zündung aktivierbar.

In einer bevorzugten Ausführungsform umfasst das Notfallsystem einen Temperatursensor, über den die Temperatur der Notfallbatterie erfasst wird, sowie eine elektronische Steuereinrichtung, die die Heizeinrichtung in Abhängigkeit der vom Temperatursensor gemessenen Temperatur steuert. Alternativ kann die Ansteuerung auch über die erwähnte zum Bordnetz gehörige Bordelektronik erfolgen, sofern diese mit dem Temperatursensor gekoppelt ist.

Das Bordnetz umfasst in der Regel mindestens einen eigenen Temperatursensor, über den die Umgebungstemperatur des Kraftfahrzeuges und/oder seine Innentemperatur erfasst wird. In einer weiteren bevorzugten Ausführungsform wird die Heizeinrichtung in Abhängigkeit der von diesem Temperatursensor gemessenen Temperatur gesteuert. Die Ansteuerung erfolgt gegebenenfalls bevorzugt ebenfalls über die erwähnte zum Bordnetz gehörige Bordelektronik.

In beiden Fällen wird zunächst der erwähnte untere Grenzwert festgelegt, beispielsweise auf minus 20 °C. Wird beim Aktivieren des Bordnetzes, insbesondere über den erwähnten Zündstartschalter, oder zu einem späteren Zeitpunkt von einem der Temperatursensoren eine Temperatur gemessen, die unterhalb des unteren Grenzwerts liegt, wird von einer der erwähnten Steuereinrichtungen die Heizeinrichtung des Notfallsystems aktiviert. Diese erwärmt die Notfallbatterie, deren Funktionsfähigkeit innerhalb kürzester Zeit wieder hergestellt wird.

Sobald die Temperatur der Notfallbatterie einen festgelegten oberen Grenzwert erreicht hat, ist ein weiteres Heizen nicht mehr erforderlich. Die Heizeinrichtung wird von der zugeordneten Steuerelektronik deaktiviert oder zurückgefahren.

In bevorzugten Ausführungsformen umfasst das Notfallsystem eine Sicherung, die verhindert, dass die Notfallbatterie durch unkontrolliertes Heizen, beispielsweise in Folge eines Sensorfehlers, beschädigt wird. Bei der Sicherung handelt es sich insbesondere um eine thermische Sicherung, die auslöst, wenn die Notfallbatterie eine kritische Temperatur erreicht und die Heizeinrichtung deaktiviert.

Besonders bevorzugt handelt es sich bei der Notfallbatterie um eine wiederaufladbare Batterie, insbesondere um eine Nickel-Metallhydrid-Batterie oder eine Lithium-lonen-Batterie.

Das Notfallsystem umfasst in bevorzugten Ausführungsformen eine Ladeelektronik, über die die Notfallbatterie, sobald ihr Ladezustand unter einen unteren Grenzwert fällt, aufgeladen werden kann. Die dazu erforderliche Spannung wird bevorzugt vom Bordnetz bereitgestellt.

In einer besonders bevorzugten Ausführungsform ist die Heizeinrichtung in die Notfallbatterie integriert. Wie oben ausgeführt, kann die eingesetzte Notfallbatterie eine oder mehrere elektrochemische Zellen umfassen, gegebenenfalls in Serie oder parallel geschaltet. Die Zellen befinden sich dabei in aller Regel in einem Gehäuse, aus dem Ableiter, die mit den positiven und den negativen Elektroden der Zellen verbunden sind, herausgeführt sind. Bei dem Gehäuse kann es sich beispielsweise um ein Foliengehäuse, insbesondere aus einer mehrlagigen Verbundfolie, handeln. Unter einer Integration der Heizeinrichtung in die Notfallbatterie soll verstanden werden, dass die Batterie innerhalb eines solchen Gehäuses angeordnet ist. Dies bedingt, dass neben den erwähnten Ableitern auch Leiter zur Versorgung der Heizeinrichtung mit Strom durch das Gehäuse geführt werden müssen. Da dies unter Umständen mit einem großen Aufwand verbunden ist, ist es auch möglich, die Heizeinrichtung an der Außenseite des Gehäuses anzuordnen.

Damit Wärme möglichst effizient von der Heizeinrichtung auf die Notfallbatterie übertragen werden kann, unabhängig davon ob die Heizeinrichtung in dem Gehäuse oder an seiner Außenseite angeordnet ist, ist es bevorzugt, dass die Batterie in einem flächigen Kontakt zur Heizeinrichtung steht. Dies ist besonders gut realisierbar, wenn es sich bei der Heizeinrichtung um eine Heizfolie handelt.

Bei Heizfolien handelt es sich um flächige, sehr flache Heizeinrichtungen (bevorzugten mit Dicken < 2 mm, insbesondere < 1 mm), bei denen folienartige oder bahnförmige Heizwiderstände (letztere beispielsweise hergestellt durch Ätzen von Metallfolien, durch Metallisierung, insbesondere galvanische Metallisierung, oder durch Aufwalzen oder durch Aufdrucken) zwischen elektrisch isolierenden Folien, Matten oder Platten, insbesondere aus Kunststoff oder aus mit einem Harz getränkten Faserverbund, einlaminiert sind. Derlei Heizfolien lassen sich aufgrund ihres dünnen Profils sehr vielseitig einsetzen. Ihre Flexibilität erlaubt die Herstellung einer engen thermischen Verbindung zu der zu beheizenden Batterie.

Als Material für die Heizwiderstände von im Rahmen der vorliegenden Erfindung zum Einsatz kommenden Heizeinrichtungen kommen im Grunde sämtliche bekannte Heizleiterlegierungen in Frage, allerdings nicht nur solche, die (wie z. B. Konstantan) einen über weite Temperaturbereiche annähernd konstanten spezifischen elektrischen Widerstand besitzen. Vielmehr können mit besonderem Vorteil auch Heizwiderstände zum Einsatz kommen, deren Heizleistung temperaturabhängig ist.

So können in bevorzugten Ausführungsformen Heizeinrichtungen verwendet werden, deren Heizleistung bei gleichbleibender Spannung um mindestens 1 Zehnerpotenz, vorzugsweise um mindestens zwei Zehnerpotenzen, abfällt, wenn die Temperatur von minus 40 °C auf plus 20 °C ansteigt.

Gleichsam steigt der wirksame elektrische Widerstand R [Ω] der Heizeinrichtung vorzugsweise um mindestens 1 Zehnerpotenz, vorzugsweise um mindestens zwei Zehnerpotenzen, an, wenn die Temperatur von minus 40 °C auf plus 20 °C ansteigt.

Die Heizeinrichtung umfasst mindestens einen Heizwiderstand, dessen spezifischer elektrischer Widerstand ρ [Ωm] um mindestens 1 Zehnerpotenz, vorzugsweise um mindestens zwei Zehnerpotenzen, insbesondere um mindestens 3 Zehnerpotenzen, ansteigt, wenn die Temperatur von minus 40 °C auf plus 20 °C ansteigt. Bevorzugt steigt der spezifische elektrische Widerstand dabei auf einen Wert > 10⁶ Ωm

Heizwiderstände mit entsprechenden Eigenschaften sind dem Fachmann bekannt.

Bevorzugt ist bei Temperaturen oberhalb 0 °C der Widerstand des Heizelementes so hoch, dass durch das Heizelement praktisch kein Strom mehr fließt. Entsprechend liegt seine Heizleistung bei 0. Fällt die Temperatur, so können dagegen höhere Ströme durch das Heizelement fließen, das sich in der Folge erwärmt. Eine solche Heizeinrichtung benötigt keine externe Regulierung, beispielsweise durch die erwähnten elektronischen Steuereinrichtungen oder die erwähnte Sicherung. Sie schaltet sich in Abhängigkeit der Temperatur der Batterie eigenständig zu oder aus.

Besonders bevorzugt ist die Notfallbatterie eines erfindungsgemäßen Notfallsystems derart dimensioniert, dass sie im geladenen Zustand bei einer Temperatur von minus 40 °C oder tiefer, vorzugsweise von minus 20 °C oder tiefer, insbesondere bei einer Temperatur unter 0 °C, ohne die Heizeinrichtung nicht in der Lage ist, eine zum Betrieb der Mobilfunkeinrichtung ausreichende Spannung bereitzustellen. Wie eingangs erwähnt wurde, ist es bei aus dem Stand der Technik bekannten Notfallsystemen üblich, die verwendeten Notfallbatterien stark überzudimensionieren, um ihre Funktionsfähigkeit auch bei sehr tiefen Temperaturen zu gewährleisten. Dies ist bei dem erfindungsgemäßen Notfallsystem nicht mehr erforderlich, da die Notfallbatterie durch die Heizeinrichtung stets in einem Temperaturfenster gehalten wird, in dem sie eine optimale Leistungsfähigkeit aufweist.

Bei dem Verfahren, das Gegenstand der vorliegenden Erfindung ist, handelt es sich um ein Verfahren zum Betrieb eines Notfallsystems für ein Kraftfahrzeug mit Bordnetz. Das Verfahren soll - wie das erfindungsgemäße Notfallsystem - gewährleisten, dass bei einem Notfall, unabhängig vom Zustand des Bordnetzes des Kraftfahrzeuges, ein Funknotruf abgesetzt wird. Das Notfallsystem entspricht dem oben beschriebenen, es umfasst eine Funkeinrichtung zum Absetzen des Notrufs und eine Notfallbatterie zur Versorgung der Funkeinrichtung mit elektrischer Energie umfaßt. Das Verfahren zeichnet sich dadurch aus, dass die Notfallbatterie durch eine elektrische, von dem Bordnetz mit Strom gespeiste Heizeinrichtung erwärmt wird, wenn ihre Temperatur unterhalb eines Grenzwertes liegt oder fällt, wobei die Heizeinrichtung einen Heizwiderstand umfasst, dessen spezifischer elektrischer Widerstand p [Ωm] um mindestens 1 Zehnerpotenz ansteigt, wenn die Temperatur von minus 40 °C auf plus 20 °C ansteigt.

Weitere Merkmale der Erfindung ergeben sich aus der nachfolgenden Beschreibung der Zeichnungen. Die nachfolgende Beschreibung von bevorzugten Ausführungsformen dient lediglich zur Erläuterung und zum besseren Verständnis der Erfindung und ist in keiner Weise einschränkend zu verstehen.

### Zeichnungen

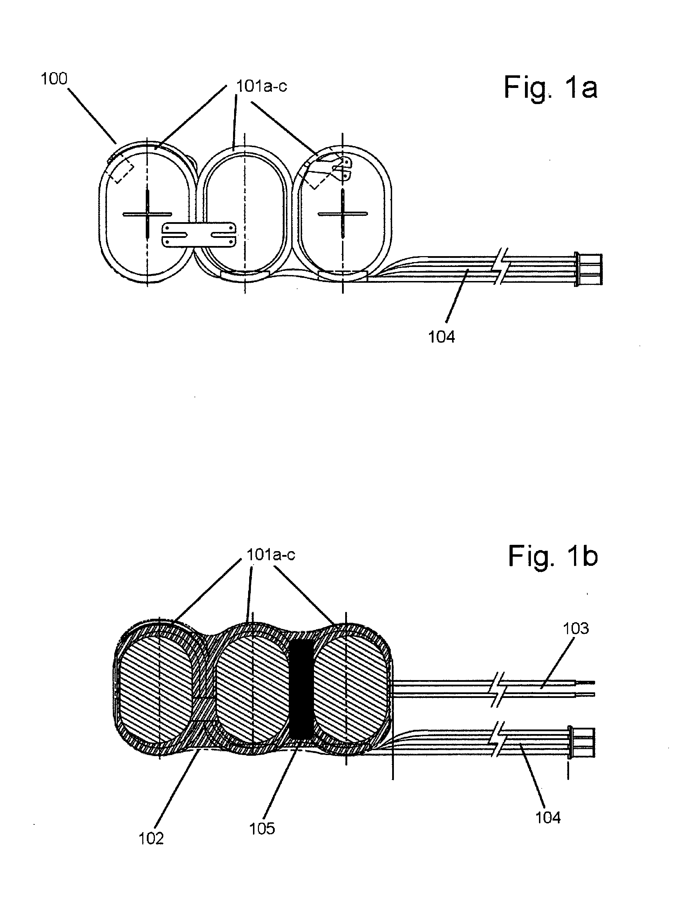

In Fig. 1a ist eine mehrzellige Batterie 100 dargestellt, die sich als Notfallbatterie für ein erfindungsgemäßes Notfallsystem eignet. Sie umfasst die drei elektrisch in Reihe geschalteten Einzelzellen 101 a-c sowie das Verbindungsmittel 104. Über dieses kann die Batterie 100 mit der Funkeinrichtung eines erfindungsgemäßen Notfallsystems gekoppelt werden.

In Fig. 1b ist die aus Fig. 1 bekannte Batterie 100 dargestellt, wobei die sichtbare Seite der Einzelzellen 101a-c mit einer Heizfolie 102 abgedeckt ist. Die Heizfolie 102 kann über das Verbindungsmittel 103 mit einer Stromquelle, vorzugsweise dem Bordnetz eines Kraftfahrzeugs, gekoppelt werden. Die Einzelzellen 101 a-c können samt der Heizfolie von einem Gehäuse, beispielsweise einem Foliengehäuse, ummantelt werden. Die Verbindungsmittel 103 und 104 müssen in diesem Fall durch das Gehäuse nach außen geführt werden.

In der dargestellten Ausführungsform umfasst die Batterie 100 noch die fakultative Kurzschluss- und/oder Überladungssicherung 105, bei der es sich beispielsweise um ein PTC-Element handeln kann.

## Patentansprüche

1. Notfallsystem für ein Kraftfahrzeug mit Bordnetz, das bei einem Notfall unabhängig vom Zustand des Bordnetzes des Kraftfahrzeugs einen Funknotruf absetzen kann, umfassend
- eine Funkeinrichtung zum Absetzen des Notrufs und
- eine Notfallbatterie (100) zur Versorgung der Funkeinrichtung mit elektrischer Energie,
**gekennzeichnet durch** eine elektrische, vom Bordnetz mit Strom gespeiste Heizeinrichtung (102), mit der die Notfallbatterie (100) erwärmt werden kann, wenn ihre Temperatur unterhalb eines unteren Grenzwerts liegt oder fällt, wobei die Heizeinrichtung (102) einen Heizwiderstand umfasst, dessen spezifischer elektrischer Widerstand p [Ωm] um mindestens 1 Zehnerpotenz ansteigt, wenn die Temperatur von minus 40 °C auf plus 20 °C ansteigt.

2. System nach Anspruch 1, **dadurch gekennzeichnet, dass** es einen Temperatursensor und eine elektronische Steuereinrichtung aufweist, die die Heizeinrichtung (102) in Abhängigkeit der gemessenen Temperatur steuert.

3. System nach Anspruch 1, **dadurch gekennzeichnet, dass** das Bordnetz eine Steuerelektronik sowie einen bordeigenen Temperatursensor umfasst und dass die Steuerelektronik die Heizeinrichtung (102) in Abhängigkeit der gemessenen Temperatur steuert.

4. System nach einem der vorhergehenden Ansprüche, **dadurch gekennzeichnet, dass** die Notfallbatterie (100) eine wiederaufladbare Batterie ist, insbesondere vom Typ Nickel-Metallhydrid oder Lithium-Ionen.

5. System nach einem der vorhergehenden Ansprüche, **dadurch gekennzeichnet, dass** die Heizeinrichtung (102) in die Notfallbatterie (100) integriert ist oder in direktem Kontakt zum Gehäuse der Notfallbatterie (100) steht.

6. System nach einem der vorhergehenden Ansprüche, **dadurch gekennzeichnet, dass** es sich bei der Heizeinrichtung (102) um eine Heizfolie handelt.

7. System nach einem der vorhergehenden Ansprüche, **dadurch gekennzeichnet, dass** die Heizleistung der Heizeinrichtung (102) bei gleichbleibender Spannung um mindestens 1 Zehnerpotenz, vorzugsweise um mindestens zwei Zehnerpotenzen, abfällt, wenn die Temperatur von minus 40 °C auf plus 20 °C ansteigt.

8. System nach einem der vorhergehenden Ansprüche, **dadurch gekennzeichnet, dass** die Heizeinrichtung (102) einen Heizwiderstand umfasst, dessen spezifischer elektrischer Widerstand p [Ωm] um mindestens zwei Zehnerpotenzen ansteigt, wenn die Temperatur von minus 40 °C auf plus 20 °C ansteigt.

9. System nach einem der vorhergehenden Ansprüche, **dadurch gekennzeichnet, dass** der wirksame elektrische Widerstand R [Ω] der Heizeinrichtung (102) mindestens 1 Zehnerpotenz, vorzugsweise um mindestens zwei Zehnerpotenzen, ansteigt, wenn die Temperatur von minus 40 °C auf plus 20 °C ansteigt.

10. Verfahren zum Betrieb eines Notfallsystems für ein Kraftfahrzeug mit Bordnetz, das bei einem Unfall, unabhängig vom Zustand des Bordnetzes des Kraftfahrzeugs, einen Funknotruf absetzen kann, wobei das Notfallsystem eine Funkeinrichtung zum Absetzen des Notrufs und eine Notfallbatterie (100) zur Versorgung der Funkeinrichtung mit elektrischer Energie umfasst, **dadurch gekennzeichnet, dass** die Notfallbatterie (100) durch eine elektrische, von dem Bordnetz mit Strom gespeiste Heizeinrichtung (102) erwärmt wird, wenn ihre Temperatur unterhalb eines unteren Grenzwertes liegt oder fällt, wobei die Heizeinrichtung (102) einen Heizwiderstand umfasst, dessen spezifischer elektrischer Widerstand p [Ωm] um mindestens 1 Zehnerpotenz ansteigt, wenn die Temperatur von minus 40 °C auf plus 20 °C ansteigt.

## Claims

1. An emergency system for a motor vehicle having an on-board power supply system, which in the case of an emergency can trigger a radio emergency call regardless of the state of the on-board power supply system of the motor vehicle, comprising
- a radiocommunication device for triggering the emergency call, and
- a back-up battery (100) for supplying the radiocommunication device with electric energy,
**characterized by** an electric heating device (102) supplied with power by the on-board power supply system by means of which device the back-up battery (100) can be heated, when its temperature is below or drops below a lower limit value, wherein the heating device (102) comprises a heating resistor whose specific electric resistance p [Ωm] increases by at least 1 decimal power, when the temperature increases from minus 40 °C to plus 20 °C.

2. The system according to claim 1, **characterized in that** it comprises a temperature sensor and an electronic control device which controls the heating device (102) in response to the temperature measured.

3. The system according to claim 1, **characterized in that** the on-board power supply system comprises control electronics as well as an on-board distinct temperature sensor, and **in that** the control electronics control the heating device (102) in response to the temperature measured.

4. The system according to any one of the preceding claims, **characterized in that** the back-up battery (100) is a rechargeable battery, in particular of the nickel metal hydride or lithium ion type.

5. The system according to any one of the preceding claims, **characterized in that** the heating device (102) is integrated in the back-up battery (100) or is in direct contact to the casing of the back-up battery (100).

6. The system according to any one of the preceding claims, **characterized in that** the heating device (102) is a heating foil.

7. The system according to any one of the preceding claims, **characterized in that** the heating capacity of the heating device (102) at a constant voltage decreases by at least 1 decimal power, preferably by at least two decimal powers, when the temperature increases from minus 40 °C to plus 20 °C.

8. The system according to any one of the preceding claims, **characterized in that** the heating device (102) comprises a heating resistor whose specific electric resistance p [Ωm] increases by at least two decimal powers, when the temperature increases from minus 40 °C to plus 20 °C.

9. The system according to any one of the preceding claims, **characterized in that** the effective electric resistance R [Ω] of the heating device (102) increases by at least 1 decimal power, preferably by at least two decimal powers, when the temperature increases from minus 40 °C to plus 20 °C.

10. A method for operating an emergency system for a motor vehicle having an on-board power supply system, which in the case of an accident can trigger a radio emergency call regardless of the state of the on-board power supply system of the motor vehicle, wherein the emergency system comprises a radiocommunication device for triggering the emergency call and a back-up battery (100) for supplying the radiocommunication device with electric energy, **characterized in that** the back-up battery (100) is heated by an electric heating device (102) supplied with power by the on-board power supply system, when its temperature is below or drops below a lower limit value, wherein the heating device (102) comprises a heating resistor whose specific electric resistance p [Ωm] increases by at least 1 decimal power, when the temperature increases from minus 40 °C to plus 20 °C.

## Revendications

1. Système de secours pour un véhicule automobile équipé d'un réseau de bord qui, dans une situation d'urgence, peut envoyer un appel de détresse hertzien indépendamment de l'état du réseau de bord du véhicule automobile, comprenant
- un dispositif radioélectrique destiné à envoyer l'appel de détresse et
- une batterie de secours (100) destinée à alimenter le dispositif radioélectrique en énergie électrique,
**caractérisé par** un dispositif de chauffage (102) électrique alimenté en courant par le réseau de bord, avec lequel la batterie de secours (100) peut être chauffée lorsque sa température se trouve ou chute au-dessous d'une valeur limite inférieure, le dispositif de chauffage (102) comprenant une résistance chauffante dont la résistivité électrique ρ [Ωm] augmente d'au moins une puissance de 10 lorsque la température augmente de -40 °C à +20 °C.

2. Système selon la revendication 1, **caractérisé en ce qu'**il possède une sonde de température et un dispositif de commande électronique qui commande le dispositif de chauffage (102) en fonction de la température mesurée.

3. Système selon la revendication 1, **caractérisé en ce que** le réseau de bord comprend une électronique de commande ainsi qu'une sonde de température propre au bord et **en ce que** l'électronique de commande commande le dispositif de chauffage (102) en fonction de la température mesurée.

4. Système selon l'une des revendications précédentes, **caractérisé en ce que** la batterie de secours (100) est une batterie rechargeable, notamment du type nickel-hydrure métallique ou aux ions de lithium.

5. Système selon l'une des revendications précédentes, **caractérisé en ce que** le dispositif de chauffage (102) est intégré dans la batterie de secours (100) ou se trouve en contact direct avec le boîtier de la batterie de secours (100).

6. Système selon l'une des revendications précédentes, **caractérisé en ce que** le dispositif de chauffage (102) est un film chauffant.

7. Système selon l'une des revendications précédentes, **caractérisé en ce que** la puissance de chauffage du dispositif de chauffage (102), en présence d'une tension constante, chute d'au moins une puissance de 10, de préférence d'au moins deux puissances de 10, lorsque la température augmente de -40 °C à +20 °C.

8. Système selon l'une des revendications précédentes, **caractérisé en ce que** le dispositif de chauffage (102) comprend une résistance chauffante dont la résistivité électrique ρ [Ωm] augmente d'au moins deux puissances de 10 lorsque la température augmente de -40 °C à +20 °C.

9. Système selon l'une des revendications précédentes, **caractérisé en ce que** la résistance électrique efficace R [Ω] du dispositif de chauffage (102) augmente d'au moins une puissance de 10, de préférence d'au moins deux puissances de 10, lorsque la température augmente de -40 °C à +20 °C.

10. Procédé pour faire fonctionner un système de secours pour un véhicule automobile équipé d'un réseau de bord qui, en cas d'accident, peut envoyer un appel de détresse hertzien indépendamment de l'état du réseau de bord du véhicule automobile, le système de secours comprenant un dispositif radioélectrique destiné à envoyer l'appel de détresse et une batterie de secours (100) destinée à alimenter le dispositif radioélectrique en énergie électrique, **caractérisé en ce que** la batterie de secours (100) est chauffée par un dispositif de chauffage (102) électrique alimenté en courant par le réseau de bord lorsque sa température se trouve ou chute au-dessous d'une valeur limite inférieure, le dispositif de chauffage (102) comprenant une résistance chauffante dont la résistivité électrique ρ [Ωm] augmente d'au moins une puissance de 10 lorsque la température augmente de -40 °C à +20 °C.
